# EUROPEAN PATENT APPLICATION

(11) **EP 1 203 833 A2**
(43) Date of publication of application: **08.05.2002**
(21) Application number: 01125483.6
(22) Date of filing: 06.11.2001
(51) Int. Cl.: C23C 16/18, C07F 7/18, C07F 7/08

(54) **Organometallic copper complex and preparation of copper thin film by cvd**

(30) Priority: 06.11.2000 JP 2000336944; 29.11.2000 JP 2000362187; 19.01.2001 JP 2001011573
(71) Applicant: Ube Industries, Ltd., Ube-Shi, Yamaguchi-ken 755-8633 (JP)
(72) Inventor: Kadota, Takumi, Ube Chemical Factory, Ube-shi, Yamaguchi 755-8633 (JP); Takai, Tutomu, Ube Chemical Factory, Ube-shi, Yamaguchi 755-8633 (JP); Watanuki, Kouhei, Ube Chemical Factory, Ube-shi, Yamaguchi 755-8633 (JP)
(74) Representative: Albrecht, Thomas, Dr.

(57) **Abstract**

An organometallic copper complex having the following formula is favorably employable for preparing copper metal film by chemical vapor deposition: 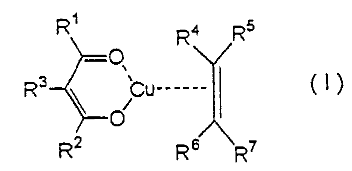 [R¹ and R² each is alkyl or perfluoroalkyl; R³ is hydrogen, fluorine, or perfluoroalkyl; and at least one of R⁴-R⁷ is a group having the formula: 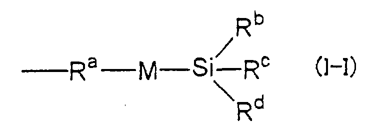 (in which R^{a} is alkylene, R^{b}, R^{c}, and R^{d} each is alkyl group, and M is oxygen or sulfur,
and each of the remainders is hydrogen or alkyl)].

## Description

### FIELD OF THE INVENTION

The present invention relates to an organometallic copper complex and a method for preparing a copper metal thin film on a substrate by means of Chemical Vapor Deposition (CVD).

### BACKGROUND OF THE INVENTION

It is known that most of electric circuits of semiconductor elements are formed of copper metal thin film, and that the copper metal thin film can be produced by chemical vapor deposition (CVD). As a copper source for the chemical vapor deposition, an organometallic copper complex is generally employed.

United States Patent 5,085,731 describes a (vinyltrimethylsilane) (hexafluoroacetylacetonato)Cu(I) complex having the formula (II) : 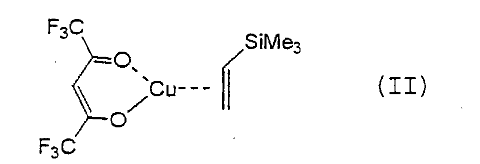 and its analogous organometallic copper complexes, and a process of chemical vapor deposition using the organometallic copper complex. According to the study by the present inventors, the above-identified organometallic copper complex is low in its thermal stability such that it decomposes at 40°C in vacuum. Therefore, the organometallic copper complex tends to decompose when the complex is heated in a deposition apparatus for performing the chemical vapor deposition.

United States Patent 5,767,301 describes an organometallic copper complex having a triethoxyvinylsilane ligand which has the following formula (III) : 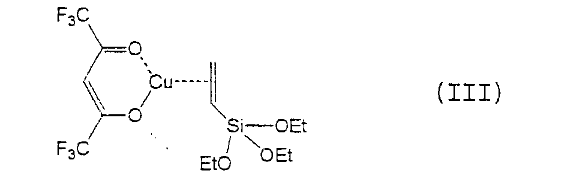 and its analogous organometallic copper complexes, and a process of chemical vapor deposition using the organometallic copper complex.

The above-mentioned organometallic copper complex is high in its thermal stability. However, probably due to the ligand of high molecular weight, the complex shows a low vapor pressure. Therefore, the complex is heated to an elevated temperature to increase its vapor pressure. This means that the complex tends to decompose in the course of vapor deposition. Moreover, the copper complex has a disadvantageous feature in that the synthesis of the ligand is not easy.

### SUMMARY OF THE INVENTION

It is an object of the present invention to provide an organometallic copper complex that is liquid at room temperature and shows high thermal stability in the vapor deposition process so that a copper metal thin film showing satisfactory electric characteristics can be produced by chemical vapor deposition.

The invention resides in an organometallic copper complex having the formula (I) : 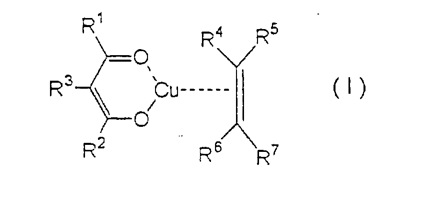 in which each of R¹ and R² independently represents an alkyl group having 1 to 8 carbon atoms or a perfluoroalkyl group having 1 to 8 carbon atoms; R³ represents a hydrogen atom, a fluorine atom, or a perfluoroalkyl group having 1 to 8 carbon atoms; and at least one of R⁴ through R⁷ represents a group having the formula (I-1): 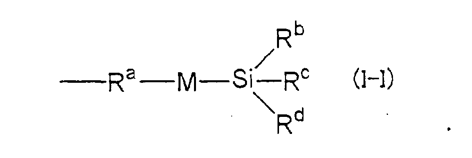 in which R^{a} represents a linear or branched chain alkylene group having 1 to 5 carbon atoms, each of R^{b}, R^{c}, and R^{d} independently represents a linear or branched chain alkyl group having 1 to 5 carbon atoms, and M is an oxygen atom or a sulfur atom,
and each of the remainders independently represents a hydrogen atom or a linear or branched chain alkyl group having 1 to 8 carbon atoms.

The invention further resides in a method for depositing a copper metal film onto a substrate surface by chemical vapor deposition, which comprises bringing the substrate surface into contact with a volatile organometallic copper complex under chemical vapor deposition conditions, said organometallic copper complex having the above-identified formula (I).

### BRIEF DESCRIPTION OF DRAWINGS

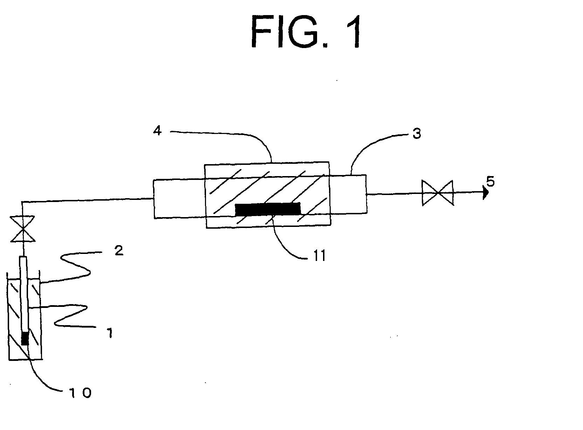

Fig. 1 schematically illustrates a CVD apparatus which was employed for the formation of a copper metal thin film in the working examples.

### DETAILED DESCRIPTION OF THE INVENTION

The organometallic copper complex of the invention is characteristic in that an olefinic ligand comprises an olefin moiety and a silylether moiety or a silylthioether moiety. Representative examples of the olefinic ligands include the following groups:

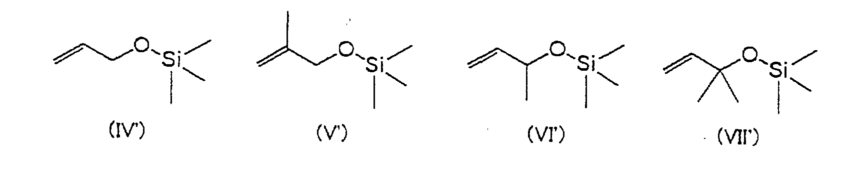

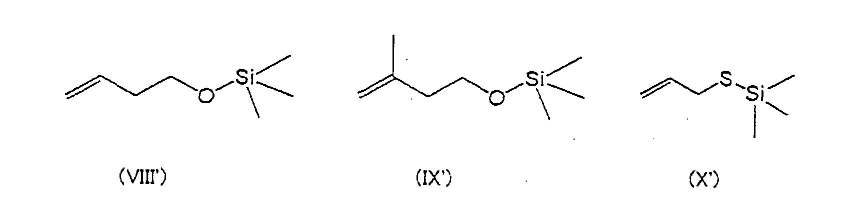

Preferably, the organometallic copper complex of the invention is a complex of the aforementioned formula (I) in which each of R¹ and R² is CF₃, R³ is H, each of R⁴, R⁵ and R⁶ is H, and R⁷ is (CH₂)₃-Si-O-CH₂-, corresponding to a ligand of the formula (IV'), namely, (3- (trimethylsilyloxy)-1-propene) (1,1,1,5,5,5-hexafluoro-2,4-pentanedionato)Cu(I) having the below-illustrated formula (IV) [hereinafter referred to as Cu(hfac) (sop)]. The term of "hfac" stands for the hexafluoroacetylacetonato group. Cu(hfac) (sop) is liquid at room temperature and shows high thermal stability.

Representative examples of the organometallic copper complexes of the invention include the following complex compounds:

(hfac) Cu(CH₂=CH-CH₂-O-Si(CH₃)₃) (IV)

(hfac)Cu(CH₂=C(CH₃)-CH₂-O-Si(CH₃)₃) (V)

(hfac) Cu (CH₂=CH-CH(CH₃)-O-Si(CH₃)₃) (VI)

(hfac)Cu(CH₂=CH-C(CH₃)₂-O-Si(CH₃)₃) (VII)

(hfac)Cu(CH₂=CH-CH₂-CH₂-O-Si(CH₃)₃) (VIII)

(hfac)Cu(CH₂=C(CH₃)-CH₂-CH₂-O-Si(CH₃)₃) (IX)

Since the organometallic copper complexes according to the invention are liquid at room temperature or its vicinity, the copper complexes of the invention can be employed in a known CVD process using a liquid source. For instance, the copper complex can be vaporized by carrier gas bubbling, or can be directly introduced into a vaporizing chamber, that is, Direct Liquid Introducing (DLI) process. In the latter process, only the copper complex can be introduced. Otherwise, a silyloxyolefin and/or β-diketone or its hydrated compound of several weight percents can be added to the copper complex.

The CVD process for the deposition of copper metal onto a substrate surface can be performed in the known manner. The conditions of deposition are appropriately adjusted depending upon the nature of substrates and types of the apparatuses in the known manner.

The organometallic copper complex of the invention can be produced by reacting copper oxide (I) with an olefinic compound having a silylether or silylthioether group and a β-diketone compound. The resulting reaction mixture is then subjected to column chromatography according to the known method so that a desired product can be isolated.

Otherwise, the ligand exchange method in which a metal complex having a ligand which differs from the ligand of the desired complex is initially produced and subsequently the ligand of the produced metal complex is exchanged with an appropriate ligand to give the desired copper complex can be favorably employed.

In the latter method, copper oxide(I) is first reacted with an olefinic compound having neither silylether group nor silylthioether group (referred to as Olefin A) and a β-diketone compound, to obtain a reaction mixture containing a copper complex having, as ligands, Olefin A and the β-diketone compound. The resulting copper complex is isolated by column chromatography in the known manner. Second, the isolated copper complex is dissolved in an appropriate solvent. To the resulting solution is added an olefinic compound having a silylether or silylthioether group of the desired metal complex so that a ligand exchange reaction can proceed. Finally, the solvent and the released free Olefin A are removed under reduced pressure, to obtain the desired organometallic copper complex. Olefin A preferably is a monoolefin having 4 to 6 carbon atoms which forms a relatively stable complex and is easily removed under reduced pressure after the ligand exchange reaction is complete.

The present invention is further described by the following non-limiting examples.

### [Example 1] Preparation of (3-(trimethylsilyloxy)-1-butene) (1,1,1,5,5,5-hexafluoro-2,4-pentanedionato)Cu(I), Cu(hfac) (somp), corresponding to the aforementioned formula (VI)

All reactions were carried out in an argon atmosphere. In a 100 cc-volume two-neck flask having been purged with argon gas was placed 40 mL of dry hexane. In the dry hexane was placed and suspended 1.43 g (10.0 mmol.) of copper oxide(I). To the suspension was added 2.89 g (20.0 mmol.) of 3-(trimethylsilyloxy)-1-butene, and the resulting mixture was stirred for 30 minuntes at room temperature. To the stirred mixture was then dropwise added 4.16 g (20.0 mmol.) of 1,1,1,5,5,5-hexafluoro-2,4-pentanedione. After the addition was complete, the mixture was stirred for 2 hours at room temperature. The unreacted copper oxide was filtered off in an argon atmosphere to give a green solution. The green solution was concentrated to give a crude product as a green liquid.

The crude product was subjected to silica gel column chromatography in an argon armosphere to isolate 4.31 g (10.4 mmol., yield 52%) of the desired yellow copper complex [Cu(hfac) (somp)].

¹H-NMR (CDCl₃) : δ 0.10 (s, 9H), 1.35 (d, 3H), 4.33 (m, 1H), 4.39 (m, 1H), 4.61 (m, 1H), 5.36 (m, 1H), 6.12 (br, 1H)

| Elementary analysis for C₁₂H₁₇F₆O₃SiCu | | | |
|---|---|---|---|
| Found | C 33.5%, | H 4.21%, | Cu 15% |
| Calulated | C 34.7%, | H 4.13%, | Cu 15.3% |
| M.p.z | 0°C | | |

### [Example 2] Preparation of (3- (trimethylsilyloxy)-1-propene) (1,1,1,5,5,5-hexafluoro-2,4-pentanedionato)Cu(I), Cu(hfac) (sop), corresponding to the aforementioned formula (IV) --- Ligand exchange process

All reactions were carried out in an argon atmosphere. In a 100 cc-volume two-neck flask having been purged with argon gas was placed 40 mL of dry hexane. In the dry hexane was placed and suspended 1.43 g (10.0 mmol.) of copper oxide(I). To the suspension was added 1.40 g (20.0 mmol.) of 2-methyl-2-butene, and the resulting mixture was stirred at 5°C for 30 minuntes. To the stirred mixture was then dropwise added 4.16 g (20.0 mmol.) of 1,1,1,5,5,5-hexafluoro-2,4-pentanedione. After the addition was complete, the mixture was stirred at 5°C for one hour. The unreacted copper oxide was filtered off in an argon atmosphere to give a yellowish green solution. The solution was concentrated to give a crude product of (2-methyl-2-butene) (1,1,1,5,5,5-hexafluoro-2,4-pentanedionato)Cu(I).

The crude product was subjected to silica gel column chromatography in an argon armosphere to give a yellow solution containing (2-methyl-2-butene) (1,1,1,5,5,5-hexafluoro-2,4-pentanedionato)Cu(I).

The resulting yellow solution was chilled to 5°C. To the chilled solution was added 2.60 g (20.0 mmol.) of 3-(trimethylsilyloxy)-1-propene, and the mixture was stirred at 5°C for one hour. The reaction mixture was placed under reduced pressure to distill the solvent, 2-methyl-2-butene, and excessive 3-(trimethylsilyloxy)-1-propene off, to obtain 4.41 g (11 mmol., yield 55%) of the desired (3-(trimethylsilyloxy)-1-propene) (1,1,1,5,5,5-hexafluoro-2,4-pentanedionato)Cu(I), i.e., Cu(hfac) (sop).

According to NMR measurement of the obtained Cu(hfac) (sop), no signal corresponding to the initially employed 2-methyl-2-butene was found. Thus, it was confirmed that 2-methyl-2-butene was completely replaced with 3-(trimethylsilyloxy)-1-propene.

¹H-NMR (CDCl₃) : δ 0.12 (s, 9H), 4.16 (m, 2H), 4.44 (m, 1H), 4.66 (m, 1H), 5.43 (m, 1H), 6.08 (br, 1H)

| Elementary analysis for C₁₁H₁₅F₆O₃SiCu | | | |
|---|---|---|---|
| Found | C 32.5%, | H 3.85%, | Cu 16% |
| Calulated | C 33.0%, | H 3.77%, | Cu 15.9% |
| M.p. | 0°C | | |

### [Example 3] Preparation of (3-methyl-3-(trimethylsilyloxy)-1-butene) (1,1,1,5,5,5-hexafluoro-2,4-pentanedionato)Cu(I), Cu(hfac) (somb), corresponding to the aforementioned formula (VII)

The procedures of Example 1 were repeated except for replacing 3-(trimethylsilyloxy)-1-butene with 3.17 g (20.0 mmol.) of 3-methyl-3-trimethylsilyloxy-1-butene, to give 4.55 g (10.6 mmol., yield 53%) of the desired Cu(hfac) (somb).

¹H-NMR (CDCl₃): δ 0.09 (s, 9H), 1.46 (s, 6H), 4.20 (d, 1H), 4.61 (d, 1H), 5.34 (m, 1H), 6.11 (br, 1H)

| Elementary analysis for C₁₃H₁₉F₆O₃SiCu | | | |
|---|---|---|---|
| Found | C 37.1%, | H 4.30%, | Cu 15% |
| Calulated | C 36.4%, | H 4.46%, | Cu 14.8% |
| M.p. | 20°C | | |

### [Example 4] Preparation of (4-(trimethylsilyloxy)-1-butene) (1,1,1,5,5,5-hexafluoro-2,4-pentanedionato)Cu(I) , Cu(hfac) (sob), corresponding to the aforementioned formula (VIII)

The procedures of Example 1 were repeated except for replacing 3-(trimethylsilyloxy)-1-butene with 2.89 g (20.0 mmol.) of 4-(trimethylsilyloxy)-1-butene, to give 4.56 g (11.0 mmol., yield 55%) of the desired Cu(hfac) (sob) as a yellow liquid.

¹H-NMR (CDCl₃) : δ 0.04 (s, 9H), 2.26 (m, 2H), 3.72 (t, 2H), 4.35 (d, 1H), 4.41 (d, 1H), 5.13-5.25 (m, 1H), 6.02 (br, 1H)

| Elementary analysis for C₁₂H₁₇F₆O₃SiCu | | | |
|---|---|---|---|
| Found | C 33.9%, | H 4.20%, | Cu 15% |
| Calulated | C 34.7%, | H 4.13%, | Cu 15.3% |
| M.p. | 19°C | | |

Each of the liquid organometallic copper complexes obtained in Examples 1 to 4 was heated at 50°C for one hour in a glass ampul tube. There was observed no change of the liquid in the ampul tube.

### [Example 5] Preparation of (3-(trimethylsilyloxy)-1-propene) (1,1,1,5,5,5-hexafluoro-2,4-pentanedionato)Cu(I), Cu(hfac) (sop), corresponding to the aforementioned formula (IV) --- Ligand exchange process

The procedures of Example 2 were repeated except for replacing 2-methyl-2-butene with 1.36 g (20.0 mmol.) of cyclopentene, to give an intermediate compound, i.e., (cyclopentene) (1,1,1,5,5,5-hexafluoro-2,4-pentanedionato)Cu(I).

The intermediate compound is then processed in the same manner as in Example 2, to give 4.25 g (10.6 mmol., yield 53%) of the desired yellow Cu(hfac)(sop).

The resulting product showed the same ¹H-NMR data as those of the product of Example 2. No signal corresponding to the initially employed cyclopentene was found in the NMR spectrum. Thus, it was confirmed that cyclopentene was completely replaced with 3-(trimethylsilyloxy) -1-propene.

### [Example 6] Preparation of (3-(trimethylsilyloxy)-1-propene) (1,1,1,5,5,5-hexafluoro-2,4-pentanedionato)Cu(I), Cu(hfac) (sop), corresponding to the aforementioned formula (IV) --- Ligand exchange process

The procedures of Example 2 were repeated except for replacing 2-methyl-2-butene with 1.68 g (20.0 mmol.) of 2,3-dimethyl-2-butene, to give an intermediate compound, i.e., (2,3-dimethyl-2-butene)(1,1,1,5,5,5-hexafluoro-2,4-pentanedionato)Cu(I).

The intermediate compound is then processed in the same manner as in Example 2, to give 4.09 g (10.2 mmol., yield 51%) of the desired yellow Cu(hfac)(sop).

The resulting product showed the same ¹H-NMR data as those of the product of Example 2. No signal corresponding to the initially employed 2,3-dimethyl-2-butene was found in the NMR spectrum. Thus, it was confirmed that 2,3-dimethyl-2-butene was completely replaced with 3-(trimethylsilyloxy) -1-propene.

### [Comparison Example 1] Preparation of (vinyltrimethylsilane)(1,1,1,5,5,5-hexafluoro-2,4-pentanedionato)Cu(I), Cu(hfac) (tmvs), corresponding to the aforementioned formula (II)

The procedures of Example 1 were repeated except for replacing 3-(trimethylsilyloxy)-1-butene with vinyltrimethylsilane, to the known Cu(hfac) (tmvs).

The Cu(hfac) (tmvs) was heated at 40°C for 20 minutes in a glass flask under vacuum (using a rotary pump). The Cu(hfac) (tmvs) changed its color from yellow to black, and a copper metal film was produced on the inner wall of the glass flask. It was confirmed that Cu(hfac) (tmvs) decomposed in the flask.

### [Examples 7 to 9] Chemical Vapor Deposition (CVD)

Each of Cu(hfac) (sop), Cu(Hfac) (somp) and Cu(hfac) (somb) was employed in CVD using an apparatus illustrated in Fig. 1.

A sample complex 10 was sealed in a glass ampule 1 and heated by a heater 2 to vaporize and the vapor was supplied into a glass reactor 3 (inner diameter 10 mm). The center area of the reactor 3 was surrounded with a heater 4. The reactor 3 was connected to a condenser (not shown) through a vacuum pump 5.

The vapor of sample complex was supplied into the reactor 3 at a predetermined pressure was brought into contact with a substrate 11 (rectangular plate, 7 mm x 40 mm) heated in the reactor 3 to decompose and deposit on the surface of the substrate 11 in the form of a copper metal film.

The conditions (temperature for vaporization, temperature of substrate, inner pressure, etc.) of the CVD procedure are set forth in Table 1.

The surface conditions of the deposited copper metal film were visually evaluated. Subsequently, the surface specific resistance of the copper metal film and the film thickness were determined by a scanning electron microscope. Then, a specific resistance and a rate of film formation were calculated.

**Table 1**

| Example 7 -- Cu(hfac) (sop) | |
|---|---|
| CVD conditions | |
| Temperature of vaporization | 40°C |
| Material of substrate | TaN/SiO₂/Si |
| Temperature of substrate | 220°C |
| Pressure | 0.05 Torr |
| Period of vaporization | 10 min. |

| Characteristics of deposited film | |
|---|---|
| Thickness | 456 nm |
| Rate of film formation | 46 nm/min. |
| Specific resistance | 3.19 µΩ cm |
| Appearance Uniform, smooth surface with glossy metal color | |

| Example 8 -- Cu(hfac)(somp) | |
|---|---|
| CVD conditions | |
| Temperature of vaporization | 40°C |
| Material of substrate | TaN/SiO₂/Si |
| Temperature of substrate | 200°C |
| Pressure | 0.05 Torr |
| Period of vaporization | 10 min. |

| Characteristics of deposited film | |
|---|---|
| Thickness | 372 nm |
| Rate of film formation | 37 nm/min. |
| Specific resistance | 3.53 µΩ cm |
| Appearance Uniform, smooth surface with glossy metal color | |

| Example 9 -- Cu(hfac) (somb) | |
|---|---|
| CVD conditions | |
| Temperature of vaporization | 40°C |
| Material of substrate | TaN/SiO₂/Si |
| Temperature of substrate | 200°C |
| Pressure | 0.05 Torr |
| Period of vaporization | 10 min. |

| Characteristics of deposited film | |
|---|---|
| Thickness | 320 nm |
| Rate of film formation | 32 nm/min. |
| Specific resistance | 3.83 µΩ cm |
| Appearance Uniform, smooth surface with glossy metal color | |

### [Comparison Examples 2 and 3] Chemical Vapor Deposition (CVD)

The organometallic copper complex having a triethoxyvinylsilane (teovs) ligand [corresponding to the aforementioned formula (III)] was subjected to CVD using the same apparatus of Examples 7 to 9 under the conditions set forth in Table 2.

**Table 2**

| Comparison Example 2 -- Cu(hfac) (teovs) | |
|---|---|
| CVD conditions | |
| Temperature of vaporization | 55°C |
| Material of substrate | TaN/SiO₂/Si |
| Temperature of substrate | 200°C |
| Pressure | 0.05 Torr |
| Period of vaporization | 10 min. |

| Results | |
|---|---|
| Almost no copper metal film was formed. | |

| Comparison Example 3 -- Cu(hfac) (teovs) | |
|---|---|
| CVD conditions | |
| Temperature of vaporization | 70°C |
| Material of substrate | TaN/SiO₂/Si |
| Temperature of substrate | 200°C |
| Pressure | 0.05 Torr |
| Period of vaporization | 10 min. |

| Results | |
|---|---|
| A copper metal film was formed, but substantial decomposition of the copper complex in the glass amplule was noted. | |

It was confirmed that the vaporizing temperature of Cu(hfac) (teovs) is high, and the vaporization of Cu(hfac) (teovs) at a high temperature results in decomposition of a portion of Cu(hfac) (teovs).

## Claims

1. An organometallic copper complex having the formula: 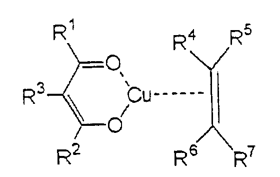 in which each of R¹ and R² independently represents an alkyl group having 1 to 8 carbon atoms or a perfluoroalkyl group having 1 to 8 carbon atoms; R³ represents a hydrogen atom, a fluorine atom, or a perfluoroalkyl group having 1 to 8 carbon atoms; and at least one of R⁴ through R⁷ represents a group having the formula: 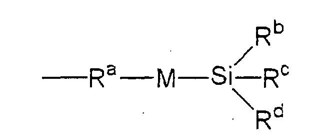 in which R^{a} represents a linear or branched chain alkylene group having 1 to 5 carbon atoms, each of R^{b}, R^{c}, and R^{d} independently represents a linear or branched chain alkyl group having 1 to 5 carbon atoms, and M is an oxygen atom or a sulfur atom,
and each of the remainders independently represents a hydrogen atom or a linear or branched chain alkyl group having 1 to 8 carbon atoms.

2. The organometallic copper complex of claim 1, wherein each of R¹ and R² is CF₃ and R³ is H.

3. The organometallic copper complex of claim 1 or 2, wherein each of R⁴, R⁵ and R⁶ is H, and R⁷ is a group of the formula (I-1) in which each of R^{b}, R^{c} and R^{d} is CH₃, M is O, and R^{a} is a group represented by -CH₂-, -CH(CH₃)-, -C(CH₃)₂-, or -CH₂-CH₂-.

4. The organometallic copper complex of claim 1 or 2, which is represented by one of the following formulas:
(hfac)Cu(CH₂=CH-CH₂-O-Si(CH₃)₃)
(hfac)Cu(CH₂=C(CH₃)-CH₂-O-Si(CH₃)₃)
(hfac)Cu(CH₂=CH-CH(CH₃)-O-Si(CH₃)₃)
(hfac)Cu(CH₂=CH-C(CH₃)₂-O-Si(CH₃)₃)
(hfac)Cu(CH₂=CH-CH₂-CH₂-O-Si(CH₃)₃)
(hfac)Cu(CH₂=C(CH₃)-CH₂-CH₂-O-Si(CH₃)₃),
wherein hfac stands for hexafluoroacetylacetonato.

5. A method for depositing a copper metal film onto a substrate surface by chemical vapor deposition, which comprises bringing the substrate surface into contact with a volatile organometallic copper complex under chemical vapor deposition conditions, said organometallic copper complex having the formula: 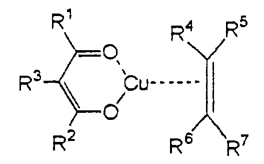 in which each of R¹ and R² independently represents an alkyl group having 1 to 8 carbon atoms or a perfluoroalkyl group having 1 to 8 carbon atoms; R³ represents a hydrogen atom, a fluorine atom, or a perfluoroalkyl group having 1 to 8 carbon atoms; and at least one of R⁴ through R⁷ represents a group having the formula: 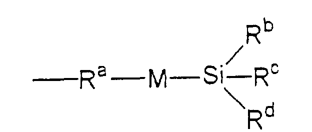 in which R^{a} represents a linear or branched chain alkylene group having 1 to 5 carbon atoms, each of R^{b}, R^{c}, and R^{d} independently represents a linear or branched chain alkyl group having 1 to 5 carbon atoms, and M is an oxygen atom or a sulfur atom,
and each of the remainders independently represents a hydrogen atom or a linear or branched chain alkyl group having 1 to 8 carbon atoms.

6. The method of claim 5, wherein each of R¹ and R² is CF₃ and R³ is H.

7. The method of claim 5 or 6, wherein each of R⁴, R⁵ and R⁶ is H, and R⁷ is a group of the formula (I-1) in which each of R^{b}, R^{c} and R^{d} is CH₃, M is O, and R^{a} is a group represented by -CH₂-, -CH(CH₃)-, -C(CH₃)₂-, or -CH₂-CH₂-.

8. The method of claim 5 or 6, which is represented by one of the following formulas:
(hfac) Cu(CH₂=CH-CH₂-O-Si(CH₃)₃)
(hfac) Cu(CH₂=C(CH₃)-CH₂-O-Si(CH₃)₃)
(hfac) Cu(CH₂=CH-CH(CH₃)-O-Si(CH₃)₃)
(hfac) Cu(CH₂=CH-C(CH₃)₂-O-Si(CH₃)₃)
(hfac) Cu(CH₂=CH-CH₂-CH₂-O-Si(CH₃)₃)
(hfac) Cu(CH₂=C(CH₃)-CH₂-CH₂-O-Si(CH₃)₃),
wherein hfac stands for hexafluoroacetylacetonato.
